# EUROPÄISCHE PATENTSCHRIFT

(11) **EP 3 632 051 B1**
(45) Veröffentlichungstag und Bekanntmachung des Hinweises auf die Patenterteilung: **19.03.2025**
(21) Anmeldenummer: 18726426.2
(22) Anmeldetag: 17.05.2018
(51) Int. Cl.: H04L 12/40, H04L 12/423, H04L 41/0803

(54) **INITIALISIERUNG VON DATENBUSTEILNEHMERN**
INITIALIZATION OF DATA BUS SUBSCRIBERS
INITIALISATION D'ABONNÉS DE BUS DE DONNÉES

(30) Priorität: 24.05.2017 DE 102017208818
(43) Veröffentlichungstag der Anmeldung: 08.04.2020
(73) Patentinhaber: WAGO Verwaltungsgesellschaft mbH, 32423 Minden (DE)
(72) Erfinder: JEROLM, Daniel, 49152 Bad Essen (DE)
(74) Vertreter: Bardehle Pagenberg Partnerschaft mbB Patentanwälte Rechtsanwälte
(86) Internationale Anmeldenummer: PCT/EP2018/062941
(87) Internationale Veröffentlichungsnummer: WO 2018/215295

(56) Entgegenhaltungen:
- WO-A2-02/15517
- KR-B1- 101 576 050
- US-A1- 2007 081 473
- US-A1- 2015 110 126
- TENRUH MAHMUT ET AL: "DESIGN AND PERFORMANCE ANALYSIS OF CONTROLLER AREA NETWORK CUT- THROUGH BRIDGES KONTROL ALAN AGI DOGRUDAN GEÇiSLi KÖPRÜLERiNiN DiZAYNI VE PERFORMANS ANALiZi ÖZET", 1 January 2002 (2002-01-01), pages 267 - 272, XP055844973, Retrieved from the Internet <URL:http://acikerisim.mu.edu.tr/xmlui/bitstream/handle/20.500.12809/8257/tenruh.pdf?sequence=1&isAllowed=y> [retrieved on 20210927]
- "Computer Networks, fifth edition", 7 October 2010, PRENTICE HALL, US, ISBN: 978-0-13-212695-3, article ANDREW S. TANENBAUM ET AL: "Computer Networks (5th Edition)", pages: 1-192,257 - 350,813-82, XP055509873
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, vol. msc.upamd, 18 November 2010 (2010-11-18), pages 1 - 52, XP017637056

## Beschreibung

### 1. Gebiet der Erfindung

Die Erfindung betrifft im Allgemeinen die Initialisierung von Datenbusteilnehmern und im Speziellen die Programmierung von Datenbusteilnehmern eines Ringbusses mit Hilfe von Instruktionslisten.

### 2. Stand der Technik

Datenbusteilnehmer finden sich zumeist in Automatisierungsanlagen. Ein Datenbusteilnehmer dient zum Steuern oder Überwachen eines Prozesses einer Automatisierungsanlage. Dies wird bewerkstelligt durch eine Ausgabe von Steuersignalen z.B. an Aktoren und/oder durch einen Empfang von Messsignalen z.B. von Sensoren der Automatisierungsanlage.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Die Teilnehmer eines Bussystems werden auch als Busteilnehmer bezeichnet. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist.

Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt (*engl.* Header) oder angehängt (*engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Daten vorangestellt oder angefügt werden können.

Ein Beispiel eines Lokalbusses ist ein Ringbus, der eine spezialisierte Form des Lokalbusses darstellt, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einer derartigen Ringbusanordnung oder auch in einem anderen Lokalbus ist es aufwendig die Datenbusteilnehmer zu programmieren. Für die Programmierung der Datenbusteilnehmer muss beispielsweise die Übertragung auf dem Bus unterbrochen werden, oder der Datenbusteilnehmer muss über eine externe Schnittstelle programmiert werden, wobei der Datenbusteilnehmer in dieser Zeit nicht an der Kommunikation auf dem Lokalbus teilnehmen kann.

Weiterer Stand der Technik ist in der US 2007/081473 A1, WO 02/15517 A2 und der US 2015/110126 A1 offenbart.

Ausgehend hiervon ist es die Aufgabe der vorliegenden Erfindung, ein verbessertes Verfahren und einen verbesserten Datenbusteilnehmer bereitzustellen, mit dem eine Programmierung der Datenbusteilnehmer auch während des Betriebs des Lokalbusses möglich ist, so dass der Datenbusteilnehmer unmittelbar nach der Programmierung während des Betriebs des Lokalbusses Prozessdaten verarbeiten kann.

### 3. Zusammenfassung der Erfindung

Diese Aufgabe wird mit einem Verfahren und einem Datenbusteilnehmer entsprechend der unabhängigen Ansprüche gelöst. Vorteilhafte Ausführungsformen sind in den Unteransprüchen beschrieben. Das erfindungsgemäße Verfahren zum Betrieb eines Datenbusteilnehmers eines Lokalbusses, insbesondere eines Ringbusses, weist die Schritte auf von Empfangen eines ersten Datenpakets über den Lokalbus, wobei das erste Datenpaket eine Adresse des Datenbusteilnehmers aufweist an den es gerichtet ist und zumindest eine Instruktionsliste mit einem Satz von Instruktionen zum Verarbeiten von Prozessdaten. Gerichtet in diesem Fall bedeutet, dass die in dem Datenpaket enthaltene Instruktionsliste für einen bestimmten Datenbusteilnehmer im Lokalbus bestimmt ist. Die Instruktionen der Instruktionsliste können unterschiedlichste Verarbeitungsschritte vorgeben, die mit den Prozessdaten durchgeführt werden sollen. Die zumindest eine Instruktionsliste enthält dabei beispielsweise Instruktionen, die ein Regelwerk zur Verarbeitung der Prozessdaten vorgeben. Das Regelwerk definiert beispielsweise welche Prozessdaten von einem Datenbusteilnehmer aus einem auf dem Lokalbus durchlaufenden Datenstrom selektiert werden sollen, welche gelesen werden sollen, oder an welchen Stellen vom Datenbusteilnehmer Prozessdaten geschrieben werden sollen, und/oder welche Prozessdaten der Datenbusteilnehmer auf andere Art und Weise manipulieren soll. Die Instruktionslisten definieren dementsprechend ein Verhalten des Datenbusteilnehmers in Bezug auf die zu verarbeitenden Prozessdaten. Der Datenbusteilnehmer an den die Instruktionsliste gerichtet ist, kann die Instruktionsliste in einem Speicher speichern und die Instruktionsliste zur Verarbeitung von Prozessdaten zu einem späteren Zeitpunkt verwenden. Dazu kann die Instruktionsliste derart gespeichert werden, dass diese gezielt auffindbar ist. Das Speichern kann dabei alle Arten des Vorhaltens der Instruktionsliste umfassen. Es ist dabei nur von Bedeutung, dass der Datenbusteilnehmer Zugriff auf die empfangene zumindest eine Instruktionsliste hat, d.h. Zugriff auf den Speicher hat. Entsprechend kann die zumindest eine Instruktionsliste in dem Datenbusteilnehmer selbst gespeichert werden, beispielsweise in einem Speicher des Datenbusteilnehmers, oder in einem mit dem Datenbusteilnehmer verbundenen Speicher. Die Verbindung zwischen Datenbusteilnehmer und Speicher kann dabei kabelgebunden oder kabellos geschehen. Auch ist denkbar, dass der Speicher ein Zusatzmodul ist, welches mit dem Datenbusteilnehmer verbunden werden kann. Der Speicher kann beliebig ausgestaltet sein.

Das erste Datenpaket kann auch als Kommunikationsdatenpaket bezeichnet werden und vorzugsweise keine Prozessdaten enthalten. Vorteilhafterweise enthält ein Kommunikationsdatenpaket Daten insbesondere zum Programmieren und/oder zum Steuern und/oder zum Überwachen und/oder zum Identifizieren zumindest eines Datenbusteilnehmers. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten und das Kommunikationsdatenpaket zu lesen, so dass der Datenbusteilnehmer mit den in dem Kommunikationsdatenpaket vorhandenen Informationen, beispielsweise der Instruktionsliste programmiert werden kann beziehungsweise diese Informationen speichert und damit programmiert ist.

Weiter weist das erfindungsgemäße Verfahren das Empfangen eines zweiten Datenpakets über den Lokalbus auf, wobei das zweite Datenpaket Prozessdaten aufweist. Diese empfangenen Prozessdaten lassen sich dann durch Ausführen von Instruktionen der zumindest einen im ersten Datenpaket empfangenen Instruktionsliste verarbeiten.

Das zweite Datenpaket kann auch als Prozessdatenpaket bezeichnet werden und enthält Prozessdaten, die von den Datenbusteilnehmern des Lokalbusses gesendet und/oder empfangen werden. Vorteilhafterweise weist das Prozessdatenpaket keine Adresse zur Übertragung der Prozessdaten an einen oder von einem Datenbusteilnehmer im Lokalbus auf. In dem Prozessdatenpaket sind die Prozessdaten beispielsweise derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist. Die Prozessdaten können auch als Lokalbusdaten bezeichnet werden.

Durch die Verwendung eines ersten Datenpakets, welches in einer lokalbuskonformen Kommunikation an einen Datenbusteilnehmer gesendet wird, kann dieser programmiert werden, ohne dass hierfür eine externe Programmierung nötig wäre. Die Programmierung findet für den Datenbusteilnehmer dementsprechend im laufenden Betrieb des Lokalbusses statt. Sobald der Datenbusteilnehmer die im ersten Datenpaket enthaltene Instruktionsliste gespeichert hat, ist die Programmierung des Datenbusteilnehmers abgeschlossen und dieser kann die in einer weiteren lokalbuskonformen Kommunikation enthaltenen Prozessdaten verarbeiten.

In einer bevorzugten Ausführungsform des erfindungsgemäßen Verfahrens weist dieses weiter auf, Vergleichen der im ersten Datenpaket empfangenen Adresse mit einer Adresse des Datenbusteilnehmers. Nur bei einer Übereinstimmung der Adressen speichert der Datenbusteilnehmer die im ersten Datenpaket folgende Instruktionsliste, so dass nur der Datenbusteilnehmer programmiert wird, an den die Instruktionsliste gerichtet ist. Beispielsweise kann die Adresse aber auch eine Gruppenadresse sein, d.h. mehrere Datenbusteilnehmer werden eine Übereinstimmung mit der Adresse feststellen, so dass mehrere Datenbusteilnehmer programmiert werden können. Dies ist zum Beispiel vorteilhaft, wenn mehrere Datenbusteilnehmer die gleiche Aufgabe im Automatisierungssystem übernehmen und dementsprechend auch mit gleichen Sensoren und/oder Aktoren ausgestattet sind aber beispielsweise unterschiedliche Positionen im Automatisierungsprozess einnehmen.

In einer bevorzugten Ausführungsform des erfindungsgemäßen Verfahrens werden das erste und zweite Datenpaket in einem Lokalbus konformen Zyklusrahmen empfangen. D.h. die Programmierung sowie die mit der Programmierung zu verarbeitenden Prozessdaten können in dem gleichen Zyklusrahmen gesendet werden. Es ist aber auch möglich, dass das erste und zweite Datenpaket in unterschiedlichen Zyklusrahmen empfangen werden. Ein Zyklusrahmen kann dabei beispielsweise als ein wiederkehrendes (zyklisches) vorzugsweise äquidistantes Zeitintervall, in dem Daten auf dem Lokalbus übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Datenpakete vorgesehen. Die Startkennung (SOC) und die Datenpakete werden über den Lokalbus übertragen und durchlaufen alle Datenbusteilnehmer. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Vorzugsweise wird der Zyklusrahmen von einem Lokalbusmaster erzeugt. Dieser Lokalbusmaster kann bereits entsprechend der zu verarbeitenden Prozessdaten, die Programmierung vorgeben. Dies hat den Vorteil, dass es zu keiner Unterbrechung der Kommunikation kommt. Auch ist der zusätzliche Aufwand *(engl.* Overhead) für den Lokalbusmaster sehr gering, weil dieser nicht eine extra Kommunikation zur Programmierung verwenden muss oder aufwendig die lokalbuskonforme Kommunikation anpassen muss, sondern der Lokalbusmaster kann die Programmierung in die normale Prozessdatenkommunikation einbinden.

In einer weiteren bevorzugten Ausführungsform des erfindungsgemäßen Verfahrens weist das zweite Datenpaket weiter einen Instruktionslistenindex (ILI) auf. Dieser Instruktionslistenindex wird verwendet zum Auswählen einer Instruktionsliste zum Verarbeiten der empfangenen Prozessdaten. Der Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste im Datenbusteilnehmer gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle *(engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Der Instruktionslistenindex kann vorzugsweise einen Wert aus einem festen Wertebereich aufweisen. Beispielsweise kann der Instruktionslistenindex aus dem Bitwertebereich zwischen 0000 bis 1111 stammen. Es ist dem Fachmann aber klar, dass auch andere Wertebereiche verwendet werden können. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Die über den Instruktionslistenindex aufgefundene Instruktionsliste wird dann durch den Datenbusteilnehmer ausgeführt zum Verarbeiten der Prozessdaten im zweiten Datenpaket. Es wird also der Satz von Instruktionen der ausgewählten Instruktionsliste abgearbeitet. Enthält der Instruktionslistenindex einen Verweis auf eine Instruktionsliste, die am Datenbusteilnehmer nicht vorhanden ist, so kann der Datenbusteilnehmer einen Fehler melden. Auch kann der Datenbusteilnehmer den Instruktionslistenindex ignorieren und keine Instruktionsliste für die Prozessdaten abarbeiten.

In einer weiteren bevorzugten Ausführungsform des erfindungsgemäßen Verfahrens weisen das erste und zweite Datenpaket eine Anzahl von Symbolen auf, wobei jedes Symbol eine Anzahl von Bits aufweist, beispielsweise 8 Bits also 1 Byte. Es ist dem Fachmann aber bewusst, dass die Stückelung der Datenpakete auch in anderen Einheiten geschehen kann, die mehr oder weniger als 8 Bits umfassen. Die Datenpakete durchlaufen den Lokalbus in Form dieser Symbole, d.h. einheitenweise, stückchenweise, oder Teile weise. Ein derartiger Teil der Datenpakete wird im Folgenden auch als Stück oder Einheit bezeichnet. D.h. die Datenbusteilnehmer haben zu jeder gegebenen Zeit immer nur einen Teil der Datenpakete vorliegen. Dabei empfängt ein Datenbusteilnehmer symbolweise die ersten und zweiten Datenpakete. Nach Verarbeitung eines Symbols sendet der Datenbusteilnehmer den gerade bearbeiteten Teil an den nachgelagerten Datenbusteilnehmer weiter und empfängt im gleichen Schritt von dem vorgelagerten Datenbusteilnehmer einen neuen Teil der Datenpakete. Ein Verarbeiten eines Teils eines Datenpakets kann auch darin bestehen, dass der Datenbusteilnehmer den Teil des Datenpakets überspringt. Zum Beispiel können alle Datenbusteilnehmer an die das erste Datenpaket nicht gerichtet ist, die zumindest eine Instruktionsliste, welche in diesem Datenpaket enthalten ist überspringen und nur der Datenbusteilnehmer an den das erste Datenpaket gerichtet ist kann die Instruktionsliste speichern. Damit eine deterministische Verarbeitungszeit gewährleistet werden kann, verbleibt jeder Teil der Datenpakete immer gleich lang an einem Datenbusteilnehmer, egal ob eine oder keine Verarbeitung stattfindet. Dies ist nötig, um den anderen Datenbusteilnehmern genügend Zeit zu geben, ihre Verarbeitungen mit den an diesen Datenbusteilnehmern vorliegenden Teilen der Datenpakete durchzuführen, bevor ein neuer Teil der Datenpakete empfangen wird. Die Verarbeitung der Teile des ersten Datenpakets kann dabei entweder aus dem Überspringen, d.h. dem der Nicht-Verarbeitung, der zumindest einen Instruktionsliste bestehen oder in deren Speicherung, wenn das erste Datenpaket an den Datenbusteilnehmer gerichtet ist, der die jeweiligen Teile empfängt. Eine Verarbeitung der Teile des zweiten Datenpakets kann darin bestehen, dass eine Bitoperation auf den empfangenen Prozessdaten ausgeführt wird. In diesem Fall kann auch davon gesprochen werden, dass die Verarbeitung bitgranular geschieht. Die Bitoperationen die durchgeführt werden können basieren beispielsweise auf einem reduzierten Instruktionssatz den der Datenbusteilnehmer ausführen kann, beispielsweise "SKIP", "MOVE", "NEGATION", "INCREMENT", "AND" und "OR" oder einer Kombination daraus. Welche Bitoperationen ausgeführt werden sollen ist in dem Datenbusteilnehmer mit Hilfe von Instruktionslisten hinterlegt. Eine Instruktionsliste kann dabei dem jeweiligen Datenbusteilnehmer in einem ersten Datenpaket zugesandt werden und stellt die Programmierung des Datenbusteilnehmers dar. Diese Instruktionslisten enthalten für jeden Teil des zweiten Datenpakets oder für jedes Bit des zweiten Datenpakets zumindest eine Instruktion, d.h. eine Operation die mit dem entsprechenden Bit durchgeführt werden soll. Dabei kann für jedes Symbol eine feste Anzahl oder eine vorherbestimmte Anzahl von Instruktionen in der Instruktionsliste vorhanden sein. D.h. jeder Datenbusteilnehmer führt in der Zeit die im zur Verarbeitung zur Verfügung steht eine gewisse Anzahl von Instruktionen pro Symbol aus. Soll der Datenbusteilnehmer beispielsweise mit dem Bit keine Verarbeitung durchführen, so kann die entsprechende Instruktionsliste für das entsprechende Bit leer sein oder eine "SKIP" Instruktion aufweisen. Die Instruktionsliste kann auch die Anzahl der Wiederholungen für eine bestimmte Instruktion aufweisen. Beispielsweise kann die Instruktionsliste eine "SKIP" Instruktion beinhalten, mit dem Hinweis diese zweimal zu wiederholen. In diesem Fall werden dann die nächsten zwei Bit nicht verarbeitet, sondern übersprungen. Auch für die Instruktionen "MOVE", "NEGATION", "INCREMENT", "AND" und "OR" können Parameter vorgegeben sein.

In einer weiteren bevorzugten Ausführungsform des erfindungsgemäßen Verfahrens ist die Adresse im ersten Datenpaket eine eineindeutige Adresse des Datenbusteilnehmers, an den das erste Datenpaket gerichtet ist. In diesem Fall bedeutet gerichtet, dass die im ersten Datenpaket enthaltene Instruktionsliste nur von dem Datenbusteilnehmer gespeichert wird, dessen Adresse mit der eineindeutigen Adresse im ersten Datenpaket übereinstimmt. D.h. eine Programmierung wird nur an dem Datenbusteilnehmer vorgenommen, dessen Adresse mit der Adresse im ersten Datenpaket übereinstimmt. Das erste Datenpakt kann dementsprechend auch als gerichtetes oder bestimmtes Datenpaket bezeichnet werden, weil es für nur einen Datenbusteilnehmer oder eine bestimmte Gruppe von Datenbusteilnehmern bestimmt ist, wohingegen das zweite Datenpaket keine Adresse beinhaltet und dementsprechend als ungerichtet oder unbestimmtes Datenpaket bezeichnet werden kann. Dabei ist das zweite Datenpaket unbestimmt, weil es die Prozessdaten für alle Datenbusteilnehmer des Lokalbusses trägt. Es kann auch davon gesprochen werden, dass das erste Datenpaket eine asynchrone Kommunikation darstellt, wohingegen das zweite Datenpaket eine synchrone Kommunikation darstellt. Die Kommunikation des ersten Datenpakets ist asynchron, weil das erste Datenpaket nicht in jedem Zyklusrahmen neu gesendet werden muss, sondern nur für die Programmierung eines Datenbusteilnehmers einmal verwendet wird. Die Kommunikation des zweiten Datenpakets ist synchron, weil das zweite Datenpaket zyklisch wiederholt wird. Dabei müssen die Prozessdaten nicht immer den gleichen Wert annehmen, aber dem Fachmann ist klar, dass bei einer Automatisierung immer wieder die gleichen Prozessschritte wiederholt werden, die das Vorhandensein von zyklisch wieder auftretenden Prozessdaten nötig machen.

Die oben genannte Aufgabe wird auch gelöst durch einen Datenbusteilnehmer eines Lokalbusses, insbesondere eines Ringbusses, wobei der Datenbusteilnehmer ein Mittel zum Empfangen eines ersten Datenpakets über den Lokalbus aufweist, wobei das erste Datenpaket eine Adresse des Datenbusteilnehmers aufweist an den es gerichtet ist und zumindest eine Instruktionsliste mit einem Satz von Instruktionen zum Verarbeiten von Prozessdaten. Der erfindungsgemäße Datenbusteilnehmer weist des Weiteren ein Mittel zum Empfangen eines zweiten Datenpakets über den Lokalbus auf, wobei das zweite Datenpaket Prozessdaten aufweist. Dabei können die Mittel zum Empfangen eine Empfängerschaltung oder eine Transceiverschaltung sein. Die Schaltungen sind zum Beispiel in einem anwendungsspezifischen integrierten Schaltkreis *(engl.* ASIC) oder in einer Feld programmierbaren (Logik-)Gatter-Anordnung *(engl.* FPGA) implementiert.

Der erfindungsgemäße Datenbusteilnehmer weist weiter ein Mittel zum Ausführen von Instruktionen der zumindest einen Instruktionsliste zum Verarbeiten der empfangenen Prozessdaten auf. Dabei kann das Mittel zum Ausführen ein Mikrocontroller oder eine Rechenschaltung sein, die insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein.

In einer bevorzugten Ausführungsform des erfindungsgemäßen Datenbusteilnehmers weist dieser weiter ein Mittel zum Senden des empfangenen zweiten Datenpakets an einen weiteren Datenbusteilnehmer über den Lokalbus auf. Der Datenbusteilnehmer kann dabei das zweite Datenpaket symbolweise an einen weiteren Datenbusteilnehmer über den Lokalbus senden. Dabei kann der weitere Datenbusteilnehmer ein Datenbusteilnehmer sein, der dem sendenden Datenbusteilnehmer direkt folgt. Das Senden der Daten kann dabei bei allen Datenbusteilnehmern synchronisiert sein, beispielsweise auf eine von dem Lokalbusmaster vorgegeben Zeitgebung oder kann durch das Empfangen weiterer Datenpakete hervorgerufen werden.

Die oben genannte Aufgabe wird auch gelöst durch ein Verfahren zum Betrieb eines Lokalbusmasters eines Lokalbusses, insbesondere eines Ringbusses, wobei das Verfahren aufweist Erzeugen zumindest einer Instruktionsliste mit einem Satz von Instruktionen zum Verarbeiten von Prozessdaten für einen Datenbusteilnehmer, Erzeugen eines ersten Datenpakets, wobei das erste Datenpaket aufweist eine Adresse des Datenbusteilnehmers, an den das erste Datenpaket gerichtet ist, und die zumindest eine Instruktionsliste, Erzeugen eines zweiten Datenpakets, wobei das zweite Datenpaket Prozessdaten aufweist und Senden der ersten und zweiten Datenpakete an den Datenbusteilnehmer über den Lokalbus.

In einer bevorzugten Ausführungsform des erfindungsgemäßen Verfahrens weisen das erste und zweite Datenpaket jeweils eine Anzahl von Symbolen auf, wobei jedes Symbol eine Anzahl von Bits aufweist und wobei die Datenpakete symbolweise an den Datenbusteilnehmer gesendet werden. Der Lokalbusmaster sendet dementsprechend taktweise ein erstes und zweites Datenpaket und diese durchlaufen sukzessive alle Datenbusteilnehmer in Abwärtsrichtung, d.h. vom Lokalbusmaster weg. Der letzte Datenbusteilnehmer im Lokalbus sendet dann die Teile nacheinander wieder zurück an den Lokalbusmaster in Aufwärtsrichtung, d.h. zum Lokalbusmaster hin. Dabei durchlaufen die zurückgesendeten Teile entweder wieder alle Datenbusteilnehmer oder werden an diesen vorbei an den Lokalbusmaster geleitet.

Die oben genannte Aufgabe wird auch gelöst durch einen Lokalbusmaster eines Lokalbusses, insbesondere eines Ringbusses, mit einem Datenbusteilnehmer. Dabei weist der Lokalbusmaster ein Mittel zum Erzeugen zumindest einer Instruktionsliste mit einem Satz von Instruktionen zum Verarbeiten von Prozessdaten für den Datenbusteilnehmer auf sowie ein Mittel zum Erzeugen eines ersten Datenpakets, wobei das erste Datenpaket aufweist eine Adresse des Datenbusteilnehmers, an den das erste Datenpaket gerichtet ist, und die zumindest eine Instruktionsliste. Des Weiteren weist der erfindungsgemäße Lokalbusmaster ein Mittel zum Erzeugen eines zweiten Datenpakets auf, wobei das zweite Datenpaket Prozessdaten aufweist. Dabei können die Mittel zum Erzeugen ein Prozessor, ein Mikrocontroller, oder eine Rechenschaltung, die insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein.

Des Weiteren weist der erfindungsgemäße Lokalbusmaster ein Mittel zum Senden des ersten und zweiten Datenpakets an den Datenbusteilnehmer über den Lokalbus auf. Dabei können die beiden Datenpakete in einem Zyklusrahmen gesendet werden, den das Mittel zum Senden erzeugen kann. Das Mittel zum Senden kann die beiden Datenpakete auch in unterschiedlichen Zyklusrahmen senden und die entsprechenden Zyklusrahmen erzeugen. Das Mittel zum Senden kann eine Senderschaltung oder eine Transceiverschaltung sein. Die Schaltungen sind zum Beispiel in einem ASIC oder FPGA implementiert.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: eine schematische Darstellung eines ersten Datenpakets zum Programmieren eines Datenbusteilnehmers;
- Fig. 3: eine schematische Darstellung eines zweiten Datenpakets zum Senden von Prozessdaten an Datenbusteilnehmer;
- Fig. 4: ein beispielhaftes Zeitdiagramm zeigend das Durchlaufen der in den Fig. 2 und 3 gezeigten Datenpakete durch die beispielhaften Datenbusteilnehmer des in Fig. 1 gezeigten Ringbusses; und
- Fig. 5: eine schematische Darstellung von Instruktionslisten zur Verarbeitung der in Fig. 2 gezeigten Prozessdaten des zweiten Datenpakets.

### 5. Beschreibung bevorzugter Ausführungsbeispiele

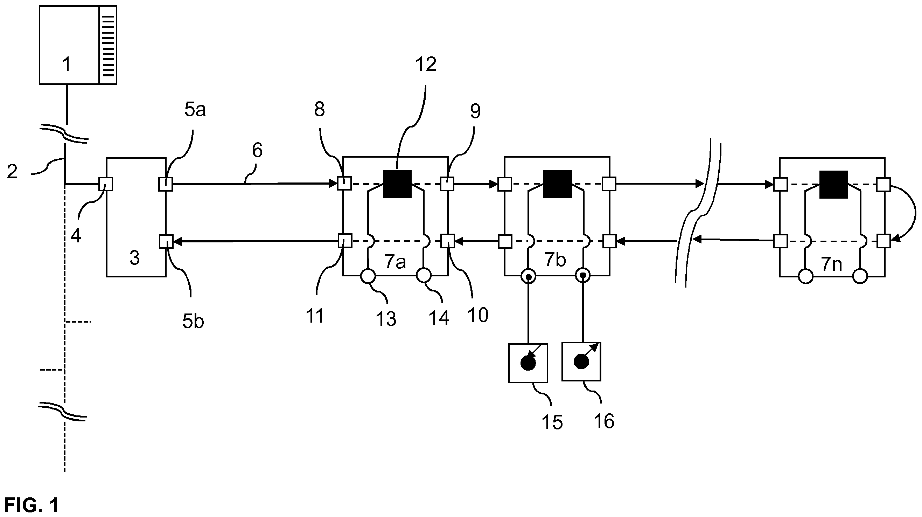

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel mehrere Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder optische Verbindung herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf. Diese Verarbeitungseinheit 12 kann eine arithmetische-logische Einheit sein oder eine andere Art von Rechenwerk sein mit dessen Hilfe Daten verarbeitet werden können. Die Verarbeitungseinheit 12 ist vorzugsweise ein integraler Bestandteil des Datenbusteilnehmers 7a, 7b, ..., 7n, um eine besonders schnelle und zeitlich synchronisierte Bearbeitung der Daten sicherzustellen.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher - hier nicht gezeigt - des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sein und die Datenbusteilnehmer 7a, 7b, 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, die Kommunikation zwischen den restlichen Datenbusteilnehmern 7a, 7b, ..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

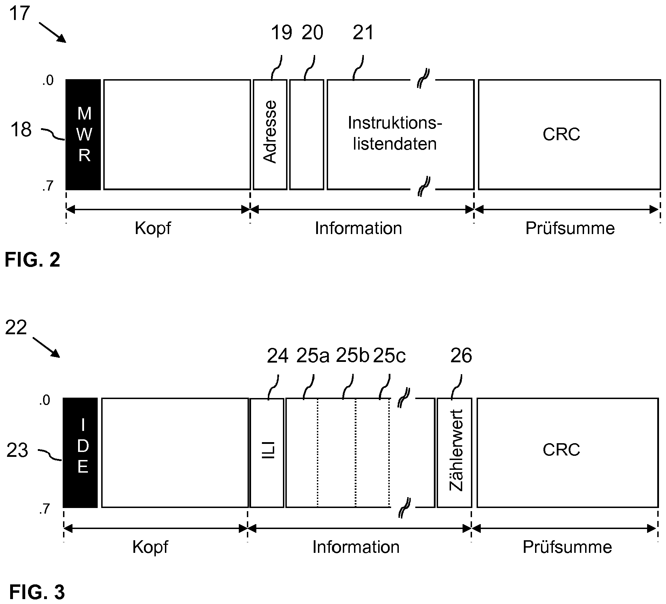

Der in dem hier gezeigten Ausführungsbeispiel gezeigte Ringbus 6 basiert auf einer sich zyklisch wiederholenden Abfolge von Datenpaketen bzw. Telegrammen oft Zyklusrahmenkommunikation genannt. Dabei werden von dem Lokalbusmaster 3 beispielsweise Datenpakete generiert, die einen Kopfteil, einen Prozessdatenteil oder Informationsdatenteil und einen Prüfsummenteil aufweisen. Der Prozessdatenteil oder Informationsdatenteil des Datenpakets kann dabei Nutz-, Steuer-, und Prozessdaten aufweisen - wie in den Figuren 2 und 3 gezeigt. Das eine Datenpaket oder die Datenpakete werden von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, gleichzeitig empfängt der erste Datenbusteilnehmer 7a einen zweiten Teil des Datenpakets usw. Die Größe der Teile der Datenpakete, also die Stückelung, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Die Datenpakete durchlaufen dementsprechend einheitenweise, stückchenweise, oder Teile weise, zum Beispiel in Teilen oder Symbolen von 8 Bits, die Datenbusteilnehmer 7a, 7b, ..., 7n. Die Datenpakete, welche vom letzten Datenbusteilnehmer, in dem hier gezeigten Ausführungsbeispiel Datenbusteilnehmer 7n, verarbeitet worden sind, durchlaufen dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Zyklusrahmens von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Datenpakete stattfindet, so dass die Datenpakete zweimal verarbeitet werden, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Datenpakete in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b, ..., 7n ohne Unterbrechung der Kommunikation stattfindet.

Figur 2 zeigt eine schematische Darstellung eines ersten Datenpakets 17 zum Programmieren eines Datenbusteilnehmers 7a, 7b, ..., 7n ohne dass die laufende Kommunikation unterbrochen werden muss. Das erste Datenpaket 17 kann dabei in einer Abfolge von Datenpaketen der laufenden zyklischen Kommunikation eingebettet werden und zur Programmierung eines Datenbusteilnehmers 7a, 7b, ..., 7n verwendet werden. Die Programmierung des einen Datenbusteilnehmers 7a, 7b, ..., 7n findet dabei mit Hilfe von Instruktionslisteninformation statt, die in dem ersten Datenpaket 17 an den zu programmierenden Datenbusteilnehmer 7a, 7b, ..., 7n gesendet wird.

Das erste Datenpaket 17 besteht dabei aus einem allgemeinen Kopfteil, einem Informationsteil und einem Prüfsummenteil. Der Kopfteil beinhaltet ein Feld 18, welches ein eindeutiges nur einmal auftretendes Bitmuster MWR enthält, welches auch als Codewort oder Kennung bezeichnet werden kann. Die Datenbusteilnehmer 7a, 7b, ..., 7n haben die Kenntnis, dass wenn das Bitmuster MWR auftritt, Daten den Datenbusteilnehmern 7a, 7b, ..., 7n zur Verfügung gestellt werden. Dabei können diese Daten eben die Instruktionslisten für die Datenbusteilnehmer 7a, 7b, ..., 7n sein, um die Datenbusteilnehmer 7a, 7b, ..., 7n zu programmieren. Der Kopf des ersten Datenpakets 17 kann auch noch weitere Informationen enthalten, die zur Steuerung oder Fehlererkennung nötig sind - hier nicht gezeigt.

Der Informationsteil des ersten Datenpakets 17 beinhaltet ein Feld 19, in dem die Adresse des anzusprechenden Datenbusteilnehmers 7a, 7b, ..., 7n hinterlegt ist. Nur der Datenbusteilnehmer 7a, 7b, ..., 7n, dessen Adresse mit der in dem Feld 19 hinterlegten Adresse übereinstimmt, liest die Instruktionslistendaten 21 des Informationsteils des ersten Datenpakets 17. Der Informationsteil kann auch noch ein weiteres Feld 20 aufweisen, welches von dem entsprechenden Datenbusteilnehmer 7a, 7b, ..., 7n dessen Adresse in Feld 19 hinterlegt ist verwendet werden kann zur Fehlererkennung, Fehlerpropagierung, oder dieses Feld 20 kann Anweisungen enthalten, wohin die Instruktionslistendaten 21 gespeichert werden sollen. Die Instruktionslistendaten 21 können zumindest eine Instruktionsliste oder mehrere Instruktionslisten beinhalten. Nach Abspeicherung der Instruktionslisten in den jeweiligen Datenbusteilnehmern 7a, 7b, ..., 7n kann auch davon gesprochen werden, dass die Programmierung des Datenbusteilnehmers 7a, 7b, ..., 7n erfolgt ist. Die Instruktionslisten weisen dabei Sätze von Instruktionen auf, die die von den Datenbusteilnehmern 7a, 7b, ..., 7n durchzuführende Verarbeitung definieren. Des Weiteren kann das erste Datenpaket 17 auch noch einen Prüfsummenteil aufweisen, mit dem eine zyklische Redundanzprüfung durchgeführt werden kann.

Nachdem ein Datenbusteilnehmer 7a, 7b, ..., 7n mit Hilfe des ersten Datenpakets 17 programmiert wurde, d.h. sobald die Instruktionsliste im Datenbusteilnehmer 7a, 7b, ..., 7n gespeichert worden ist, ist dieser Datenbusteilnehmer 7a, 7b, ..., 7n bereit Prozessdaten zu verarbeiten. Diese Prozessdaten können bereits im gleichen Zyklusrahmen, der die Programmierung des Datenbusteilnehmers 7a, 7b, ..., 7n bewerkstelligt hat, empfangen werden, nämlich in einem zweiten Datenpaket, welches dem ersten Datenpaket im Zyklusrahmen folgt. Ein derartiges zweites Datenpaket ist in Figur 3 gezeigt. Das zweite Datenpaket 22 kann aber auch in einem anderen Zyklusrahmen empfangen werden.

Figur 3 zeigt eine schematische Darstellung eines zweiten Datenpakets 22 zum Senden von Prozessdaten an die Datenbusteilnehmer 7a, 7b, ..., 7n des Ringbusses 6. Das zweite Datenpaket 22 kann dabei in einem Zyklusrahmen der laufenden Kommunikation eingebettet werden, z.B. als Teil des Prozessdatenteils.

Das zweite Datenpaket 22 besteht aus einem allgemeinen Kopfteil, einem Informationsteil und einem Prüfsummenteil. Der Kopfteil beinhaltet ein Feld 23, welches ein eindeutiges nur einmal auftretendes Bitmuster IDE enthält, welches auch als Codewort oder Kennung bezeichnet werden kann. Die Datenbusteilnehmer 7a, 7b, ..., 7n haben die Kenntnis, dass wenn das Bitmuster IDE auftritt, ein Prozessdatenpaket übertragen wird. Der Kopfteil des zweiten Datenpakets 22 kann des Weiteren noch andere Informationen beinhalten, welche zur Steuerung und/oder zur Fehlersuche verwendet werden können. Der Informationsteil des zweiten Datenpakets 22 kann als erstes ein Instruktionslistenindexfeld, ILI, 24 aufweisen welches angibt, welche Instruktionsliste die Datenbusteilnehmer 7a, 7b, ..., 7n verwenden sollen. Beispielsweise kann im Normalbetrieb des Ringbusses 6 vorgesehen sein, dass alle Datenbusteilnehmer 7a, 7b, ..., 7n ihre erste Instruktionsliste verwenden, wohingegen im Fehlerfall die zweite Instruktionsliste verwendet werden soll. Es ist auch denkbar, dass eine erste Instruktionsliste Instruktionen für Prozessdaten in einem ersten Prozessdatenpaket innerhalb eines Zyklusrahmens umfasst und eine zweite Instruktionsliste kann einen zweiten Satz von Instruktionen für Prozessdaten in einem zweiten Prozessdatenpaket innerhalb eines Zyklusrahmens umfassen. Dabei kann die erste Anordnung verschieden sein von der zweiten Anordnung. Beispielsweise kann bei einem Werkzeugwechsel an einem Aktor, der an einen Datenbusteilnehmer 7a, 7b, ..., 7n angeschlossen ist, eine andere Verarbeitung nötig werden, weil in diesem Fall auch andere für das neue Werkzeug spezifische Prozessdaten, d.h. beispielsweise Bits, in einem Datenpaket im Zyklusrahmen übertragen werden. D.h. die erste Instruktionsliste kann beispielsweise vor dem Werkzeugwechsel verwendet werden, wohingegen die zweite Instruktionsliste nach dem Werkzeugwechsel verwendet wird. Der Instruktionslistenindex 24 kann auf den Speicherplatz der im Datenbusteilnehmer 7a, 7b, ..., 7n gespeicherten Instruktionsliste direkt hinweisen, oder der Instruktionslistenindex kann einen Wert aufweisen, mit dem der Datenbusteilnehmer 7a, 7b, ..., 7n beispielsweise über eine Umsetzungstabelle die entsprechende Instruktionsliste auffinden kann, so dass entsprechend des Instruktionslistenindexes 24 entweder eine erste oder eine zweite oder eine andere durch den Instruktionslistenindex 24 angezeigte Instruktionsliste verwendet werden kann.

Der Informationsteil des zweiten Datenpakets 22 weist des Weiteren die eigentlichen Prozessdaten 25a, 25b, 25c, ... auf. Die Prozessdaten 25a, 25b, 25c, ... werden an den Datenbusteilnehmern 7a, 7b, ..., 7n verwendet um eine Steuerung, Regelung oder Auswertung durchzuführen. Die Prozessdaten 25a, 25b, 25c, ... können beispielsweise an Aktoren abgegeben werden, um eine Stellbewegung des Aktors hervorzurufen. Die Prozessdaten 25a, 25b, 25c, ... können also Steuersignale darstellen oder von den Datenbusteilnehmern 7a, 7b, ..., 7n in entsprechende Steuersignale umgewandelt werden. Die Prozessdaten 25a, 25b, 25c, ... können beispielsweise auch Messwerte darstellen, die von Sensoren aufgenommen werden, die mit den Datenbusteilnehmern 7a, 7b, ..., 7n verbundenen sind und können als Grenz- oder Stellwerte verwendet werden, um Aktoren entsprechend anzusteuern. D.h. die Datenbusteilnehmer 7a, 7b, ..., 7n setzen die Prozessdaten 25a, 25b, 25c, ... entsprechend in Steuersignale und/oder Messsignale um oder umgekehrt.

Des Weiteren weist das zweite Datenpaket 22 einen Zählerwert 26 auf, der von jedem Datenbusteilnehmer 7a, 7b, ..., 7n durch den das zweite Datenpaket 22 läuft inkrementiert oder dekrementiert wird, so dass wenn das zweite Datenpaket 22 wieder am Lokalbusmaster 3 eintrifft, beziehungsweise dieser Teil des zweiten Datenpakets 22 wieder am Lokalbusmaster 3 eintrifft, bestimmt werden kann, ob alle Datenbusteilnehmer 7a, 7b, ..., 7n den Zyklusrahmen verarbeitet haben, was inhärent auch Aufschluss darüber gibt, ob ein Datenbusteilnehmer 7a, 7b, ..., 7n einen Fehler aufweist und keine Verarbeitung durchgeführt hat. Des Weiteren kann das zweite Datenpaket 22 auch noch einen Prüfsummenteil aufweisen, mit dem eine zyklische Redundanzprüfung durchgeführt werden kann.

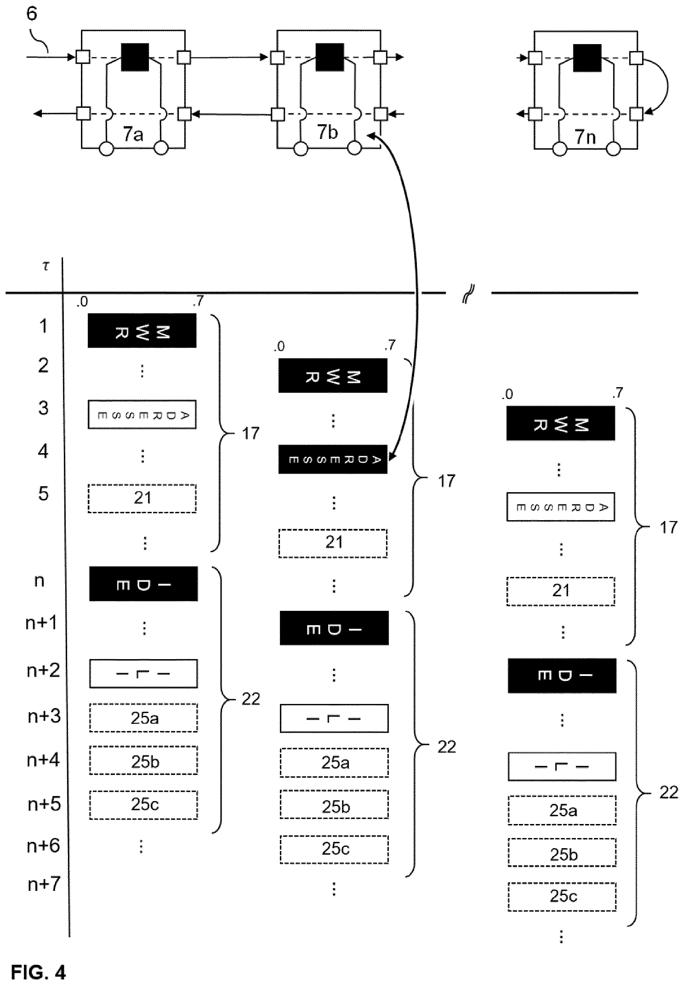

Figur 4 zeigt ein beispielhaftes Zeitdiagramm des Durchleitens des ersten und zweiten Datenpakets 17, 22 durch entsprechende Datenbusteilnehmer 7a, 7b, ..., 7n eines Ringbusses 6. In dem hier gezeigten Ausführungsbeispiel wird mit Hilfe des ersten Datenpakets 17 der zweite Datenbusteilnehmer 7b programmiert.

Zur Zeit τ = 1 hat nur der Datenbusteilnehmer 7a das Bitmuster MWR des ersten Datenpakets 17 vom Lokalbusmaster 3 in einem ersten Symbol empfangen. Der Datenbusteilnehmer weiß in diesem Fall, dass die folgenden Symbole des ersten Datenpakets 17 Instruktionslistendaten 21 tragen. Zu diesem Zeitpunkt weiß der Datenbusteilnehmer 7a aber nicht, ob diese Instruktionslistendaten 21 für ihn oder einen anderen Datenbusteilnehmer 7b, ..., 7n im Ringbus 6 bestimmt sind. Der Datenbusteilnehmer 7a kann durch den Erhalt des Symbols mit dem Bitmuster MWR in einen Empfangsmodus versetzt werden. D.h. der Datenbusteilnehmer 7a erwartet Instruktionslistendaten 21, die in einem zugreifbaren Speicher gespeichert werden können. Um ein deterministisches Verhalten des Ringbusses 6 zu gewährleisten, verbleibt das Symbol eine gewisse Zeit am Datenbusteilnehmer 7a bevor dieser es an den nachgelagerten Datenbusteilnehmer, hier Datenbusteilnehmer 7b weiterleitet.

Zur Zeit τ = 2 hat der Datenbusteilnehmer 7a das erste Symbol an den zweiten Datenbusteilnehmer 7b weitergeleitet und ein weiteres Symbol von dem Lokalbusmaster 3 erhalten. Zu dieser Zeit τ = 2 ist auch der zweite Datenbusteilnehmer 7b in den Empfangsmodus versetzt, nämlich durch den Erhalt des Symbols mit dem Bitmuster MWR. Mit Weiterleitung des Symbols tragend das MWR Bitmuster werden alle Datenbusteilnehmer 7a, 7b, ..., 7n in den Empfangsmodus versetzt.

Zur Zeit τ = 3 empfängt der erste Datenbusteilnehmer 7a vom Lokalbusmaster 3 ein Symbol des ersten Datenpakets 17, in dem eine eineindeutige Adresse des Datenbusteilnehmers 7a, 7b, ... 7n ausgewiesen ist, an den die Instruktionslistendaten 21 gerichtet sind. In dem hier gezeigten Ausführungsbeispiel enthält dieses Symbol die Information, dass die Instruktionslistendaten 21 für den zweiten Datenbusteilnehmer 7b bestimmt sind. D.h. führt der erste Datenbusteilnehmer 7a einen Vergleich seiner eineindeutigen Adresse mit der eineindeutigen Adresse in dem empfangenen Symbol durch, so wird der Datenbusteilnehmer 7a feststellen, dass seine Adresse und die im Symbol angegebene Adresse nicht übereinstimmen. In diesem Fall kann der Datenbusteilnehmer 7a seinen Empfangsmodus verlassen, weil bekannt ist, dass die folgenden Instruktionslistendaten 21 nicht für diesen Datenbusteilnehmer 7a bestimmt sind. Dabei ist für den ersten Datenbusteilnehmer 7a nicht relevant für wen die Instruktionslistendaten 21 bestimmt sind, sondern nur dass sie nicht für ihn bestimmt sind was sich aus dem Vergleich ergibt.

In dem hier gezeigten Ausführungsbeispiel hat zur Zeit τ = 4 der erste Datenbusteilnehmer 7a das Symbol mit der Adresse an den zweiten Datenbusteilnehmer 7b weitergeleitet. Dieser hat einen Vergleich der im Symbol ausgewiesenen eineindeutigen Adresse mit seiner eineindeutigen Adresse durchgeführt und hat festgestellt, dass es eine Übereinstimmung gibt. D.h. die folgenden Instruktionslistendaten 21 sind für den Datenbusteilnehmer 7b bestimmt. Sobald der Datenbusteilnehmer 7b in den folgenden Symbolen also die Instruktionslistendaten 21 empfängt, werden diese in einen zugreifbaren Speicher gespeichert. D.h. der zweite Datenbusteilnehmer 7b wird programmiert.

Die weiteren Datenbusteilnehmer 7n durch die das erste Datenpaket 17 symbolweise läuft, werden zwar durch das Symbol mit dem MWR Bitmuster in den Empfangsmodus versetzt, ein Vergleich mit dem folgenden die Adresse tragenden Symbol zeigt aber, dass die Instruktionslistendaten 21 nicht für diese Datenbusteilnehmer 7n bestimmt sind, so dass diese den Empfangsmodus wieder verlassen können.

In dem hier gezeigten Ausführungsbeispiel folgt dem ersten Datenpaket 17 das zweite Datenpaket 22. Auch dieses Datenpaket 22 durchläuft den Ringbus 6, d.h. die Datenbusteilnehmer 7a, 7b, ..., 7n symbolweise.

Zu einer angenommenen Zeit τ = n empfängt der erste Datenbusteilnehmer 7a ein Symbol mit dem Bitmuster IDE, welches den Datenbusteilnehmer 7a in einen Verarbeitungsmodus versetzt, weil dieses Bitmuster anzeigt, dass die folgenden Symbole Prozessdaten 25a, 25b, 25c, ... tragen. Das empfangene Symbol mit dem Bitmuster IDE wird dann weiter durch die Datenbusteilnehmer 7b, ..., 7n geleitet, um diese in den Verarbeitungsmodus zu versetzen. Dem Symbol mit dem IDE Bitmuster folgt ein Symbol mit einem Instruktionslistenindex, ILI. Durch den Instruktionslistenindex bekommt der Datenbusteilnehmer 7a Kenntnis darüber, welche gespeicherte Instruktionsliste dieser verwenden soll, um die folgenden Prozessdaten 25a, 25b, 25c, ... zu Verarbeiten. Auch dieser Instruktionslistenindex wird durch alle Datenbusteilnehmer 7b, ..., 7n geleitet. Beim zweiten Datenbusteilnehmer 7b kann dieser Instruktionslistenindex beispielsweise auf die gerade gespeicherte Instruktionsliste hinweisen, die über die Instruktionslistendaten 21 des ersten Datenpakets 17 empfangen wurde. Es ist also im gleichen Zyklusrahmen möglich eine Programmierung des Datenbusteilnehmers 7b vorzunehmen sowie die Programmierung direkt im Anschluss zu verwenden, um Prozessdaten 25a, 25b, 25c, ... zu verarbeiten.

Auch wenn in dem in Figuren 2 bis 4 diskutierten Ausführungsbeispiel von ersten und zweiten Datenpaketen 17, 22 gesprochen wurde, die im gleichen Zyklusrahmen gesendet werden, so ist dem Fachmann klar, dass das erste und zweite Datenpaket 17, 22 auch in unterschiedlichen Zyklusrahmen gesendet werden können, und dass ein Zyklusrahmen auch nur eins der gezeigten Datenpakete 17, 22 enthalten kann.

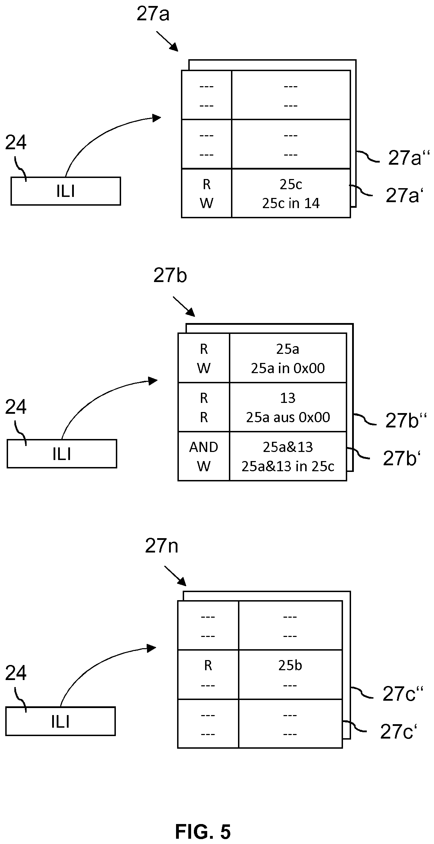

Eine Verarbeitung der Prozessdaten 25a, 25b, 25c, ... mit Hilfe des Instruktionslistenindexes und der gespeicherten Instruktionslisten ist in Figur 5 gezeigt.

Figur 5 zeigt eine beispielhafte Verarbeitung von Prozessdaten 25a, 25b, 25c, ... mit Hilfe von Instruktionslisten 27a, 27b, 27n. In dem hier gezeigten Ausführungsbeispiel sind die Instruktionslisten 27a, 27b, 27n als Tabellen dargestellt. Dabei ist die Instruktionsliste 27a im Datenbusteilnehmer 7a gespeichert, die Instruktionsliste 27b im Datenbusteilnehmer 7b und die die Instruktionsliste 27n im Datenbusteilnehmer 7n. Jede Zeile der Tabellen enthält in dem hier gezeigten Ausführungsbeispiel zwei Instruktionen, die mit dem gerade am Datenbusteilnehmer 7a, 7b, ..., 7n anhängigen Symbol des Datenpaketes ausgeführt werden können. Dem Fachmann ist aber bewusst, dass auch wenn hier nur zwei Instruktionen für zwei Arbeitstakte exemplarisch gezeigt sind, auch eine andere Anzahl von Instruktionen pro Symbol ausgeführt werden können. Des Weiteren ist dem Fachmann klar, dass die Instruktionslisten 27a, 27b, 27n, auch für jedes Bit in den Symbolen der Prozessdaten 25a, 25b, 25c, ... eine eigene Instruktion aufweisen können. Nur der Einfachheit halber und zum Zwecke der Übersichtlichkeit wurde hier darauf verzichtet entsprechende Instruktionen für jedes Bit anzugeben.

Sobald der erste Datenbusteilnehmer 7a das Symbol mit dem Instruktionslistenindex 24 empfängt, sucht dieser entsprechend des Instruktionslistenindexes 24 die passende Instruktionsliste heraus. In dem hier gezeigten Ausführungsbeispiel hat der Datenbusteilnehmer 7a zwei Instruktionslisten gespeichert, nämlich Instruktionsliste 27a' und 27a". In dem hier gezeigten Ausführungsbeispiel verweist der Instruktionslistenindex 24 auf die Instruktionsliste 27a', beispielsweise auf den Speicherplatz der ersten Instruktion der entsprechenden Instruktionsliste 27a'. Mit dem Erhalt des nächsten Symbols, welches die Prozessdaten 25a trägt, werden die ersten Instruktionen in der Instruktionsliste 27a' ausgeführt. Die erste Zeile der Instruktionsliste 27a' des Datenbusteilnehmers 7a ist leer, was mit "---" gekennzeichnet ist. D.h. der Datenbusteilnehmer 7a führt mit dem ersten empfangenen Symbol keine Verarbeitung aus, weil keine Instruktion vorhanden ist. Anstelle von leeren Instruktionen kann die Instruktionsliste 27a' an dieser Stelle auch "SKIP" Instruktionen aufweisen. Auch für das nächste Symbol welches die Prozessdaten 25b trägt hat der Datenbusteilnehmer 7a keine Instruktionen in seiner Instruktionsliste 27a'. D.h. auch diese Prozessdaten 25b werden nicht verarbeitet durch den Datenbusteilnehmer 7a, sondern verbleiben an diesem nur für eine gewisse Zeit, beispielsweise zwei Arbeitstakte, um ein deterministisches Verhalten des Ringbusses 6 zu gewährleisten, so dass jeder Datenbusteilnehmer 7a, 7b, ..., 7n für jedes gerade vorliegende Symbol die gleiche Zeit zur Verfügung hat. Erst für das dritte den Datenbusteilnehmer 7a erreichende Symbol weist diese Instruktionen auf, nämlich Lese "R" *(engl.* Read) die Prozessdaten 25c und Schreibe "W" *(engl.* Write) die Prozessdaten 25c in den Ausgang 14, der beispielsweise mit einem Aktor 16 verbunden sein kann, um dort eine Stellbewegung hervorzurufen.

Auch der Datenbusteilnehmer 7b in dem hier gezeigten Ausführungsbeispiel hat zwei Instruktionslisten gespeichert, nämlich Instruktionsliste 27b' und 27b". Dabei kann zumindest eine Instruktionsliste 27b', 27b" eine sein, die dem Datenbusteilnehmer 7b zuvor über die Instruktionslistendaten 21 des ersten Datenpakets 17 mitgeteilt wurde. D.h. es kann eine sein, mit der der Datenbusteilnehmer 7b direkt vor dem Erhalt der Prozessdaten 25a, 25b, 25c, ... programmiert wurde. In dem hier gezeigten Ausführungsbeispiel enthält die Instruktionsliste 27b' in der ersten Zeile die Instruktion Lese "R" und zwar die Prozessdaten 25a aus dem ersten den Datenbusteilnehmer 7b erreichenden Symbol nach dem Symbol, welches den Instruktionslistenindex 24 trägt. Die zweite Instruktion lautet Schreibe "W" und zwar die gerade gelesenen Prozessdaten 25a und zwar in den Speicher an Speicherposition oxoo. Für das zweite den Datenbusteilnehmer 7b erreichende Symbol weist die Instruktionsliste Verarbeitungsschritte auf, die aber nicht direkt mit den von diesem Symbol getragenen Prozessdaten 25b verbunden sind, sondern nur die Zeit ausnutzen, die der Datenbusteilnehmer 7b hat, bevor er das Symbol weiterleiten muss. In dem hier gezeigten Ausführungsbeispiel weist die Instruktionsliste 27b' die Instruktionen auf, dass der Eingang 13 des Datenbusteilnehmers 7b gelesen wird, was mit "R" gekennzeichnet ist und dass aus dem Speicher die zuvor gespeicherten Prozessdaten 25a gelesen werden. Das Lesen des Eingangs kann zum Beispiel darin bestehen, einen Sensorwert eines mit dem Eingang 13 verbundenen Sensors 15 zu lesen. Für das dritte den Datenbusteilnehmer 7b erreichende Symbol weist die Instruktionsliste 27b' die Instruktionen auf eine bitweise Kombination "AND" des vom Eingang 13 gelesenen Wertes und den Prozessdaten 25a zu erstellen und diese Kombination in das Symbol zu schreiben, d.h. die Prozessdaten 25c zu überschreiben. Die Prozessdaten 25c können überschrieben werden, weil diese bereits vom ersten Datenbusteilnehmer 7a gelesen wurden und diese von keinem weiteren Datenbusteilnehmer 7b, ..., 7n mehr benötigt werden. Auf diese Weise kann der berechnete Wert an den Lokalbusmaster 3 beziehungsweise die Steuerung 1 weitergeleitet werden. Es ist dem Fachmann bewusst, dass hier auch andere Berechnungen beziehungsweise Bitoperationen durchgeführt werden können und die angegebenen Bitoperationen nur dem Zwecke der Veranschaulichung dienen aber nicht als beschränkend zu verstehen sind.

Auch der Datenbusteilnehmer 7n kann zwei Instruktionslisten 27n' und 27n" aufweisen, wobei durch den Instruktionslistenindex 24 angezeigt wird, welche der Instruktionslisten 27n' oder 27n' verwendet werden soll. In dem hier gezeigten Ausführungsbeispiel weist der Instruktionslistenindex 24 alle Datenbusteilnehmer 7a, 7b, ..., 7n an ihre erste Instruktionsliste zu verwenden, d.h. auch der Datenbusteilnehmer 7n verwendet seine erste Instruktionsliste, nämlich Instruktionsliste 27n'. Diese Instruktionsliste 27n' weist in dem hier gezeigten Ausführungsbeispiel nur eine Instruktion für das zweite diesen Datenbusteilnehmer 7n nach dem Instruktionslistenindex 24 erreichende Symbol auf, wobei diese Instruktion lautet Lese "R" Prozessdaten 25b.

Dem Fachmann ist bewusst, dass die hier gezeigten Beispiele von Instruktionslisten nicht einschränkend zu verstehen sind und jegliche Art von Instruktionsliste und jegliche Kombinationen von Instruktionen in der Implementierung der Erfindung vorkommen kann, ohne dass von der erfinderischen Idee abgewichen wird.

Die hierin beschriebenen Verfahren können auch implementiert werden als ein computerlesbares Medium beinhaltend Code, der bewirkt, dass ein Computer zumindest eines der beschriebenen Verfahren ausführt. Das computerlesbare Medium kann dabei beliebig implementiert sein und auf deinem Trägermedium wie einer DVD, CD, Festplatte, oder anderweitiger Trägermedien bereitgestellt werden.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheit
- 13, 14: Ein-/Ausgänge
- 15: Sensor
- 16: Aktor
- 17: erstes Datenpaket
- 18: MWR Codewort
- 19: Adresse
- 20: weiteres Feld
- 21: Instruktionslistendaten
- 22: zweites Datenpaket
- 23: IDE Codewort
- 24: Instruktionslistenindex
- 25a, b, c: Prozessdaten
- 26: Zählerwert
- 27a, b, c: Instruktionslisten

## Patentansprüche

1. Ein Verfahren zum Betrieb eines Datenbusteilnehmers (7a, 7b, ..., 7n) eines Lokalbusses (6), das Verfahren aufweisend:
Empfangen eines ersten Datenpakets (17) über den Lokalbus (6), wobei das erste Datenpaket (17) eine Adresse (19) des Datenbusteilnehmers (7a, 7b, ..., 7n) an den es gerichtet ist und zumindest eine Instruktionsliste (27a, 27b, 27n) mit einem Satz von Instruktionen zum Verarbeiten von Prozessdaten (25a, 25b, 25c) aufweist;
Empfangen eines Symbols eines zweiten Datenpakets (22) über den Lokalbus (6), wobei das zweite Datenpaket (22) Prozessdaten (25a, 25b, 25c) aufweist, wobei das zweite Datenpaket (22) eine Anzahl von Symbolen aufweist;
Ausführen von Instruktionen der zumindest einen Instruktionsliste (27a, 27b, 27n) zum symbolweisen Verarbeiten der empfangenen Prozessdaten (25a, 25b, 25c);
das Verfahren **gekennzeichnet durch**:
Weiterleiten des verarbeiteten Symbols des zweiten Datenpakets (22) an einen weiteren Datenbusteilnehmer (7a, 7b, ..., 7n) über den Lokalbus (6) und gleichzeitiges Empfangen eines weiteren Symbols des zweiten Datenpakets (22), wobei die Weiterleitung so lange verzögert wird, dass jedes Symbol immer gleich lang am Datenbusteilnehmer (7a, 7b, ..., 7n) verbleibt.

2. Das Verfahren nach Anspruch 1, wobei das erste und zweite Datenpaket (17, 22) Nutzdaten eines Zyklusrahmens oder zweier Zyklusrahmen sind.

3. Das Verfahren nach einem der vorhergehenden Ansprüche, wobei das erste Datenpaket (17) eine Anzahl von Symbolen aufweisen.

4. Das Verfahren nach einem der vorhergehenden Ansprüche, wobei jedes Symbol mit einer festen Anzahl von Instruktionen der Instruktionsliste (27a, 27b, 27n) verarbeitet wird.

5. Das Verfahren nach Anspruch 4, wobei das symbolweise Verarbeiten der empfangenen Prozessdaten (25a, 25b, 25c) aufweist, bitgranulares Verarbeiten der empfangenen Prozessdaten (25a, 25b, 25c).

6. Das Verfahren nach Anspruch 5, wobei das bitgranulare Verarbeiten aufweist: Ausführen einer Bitoperation auf zumindest einem Bit des empfangenen Symbols zum Erhalten zumindest eines verarbeiteten Prozessdatums.

7. Das Verfahren nach einem der vorhergehenden Ansprüche, wobei die Adresse eine eineindeutige Adresse ist, die verwendet wird zur adressierten Kommunikation mit dem Datenbusteilnehmer (7a, 7b, ..., 7n).

8. Ein Datenbusteilnehmer (7a, 7b, ..., 7n) eines Lokalbusses (6), der Datenbusteilnehmer (7a, 7b, ..., 7n) aufweisend:
ein Mittel zum Empfangen eines ersten Datenpakets (17) über den Lokalbus (6), wobei das erste Datenpaket (17) eine Adresse (19) des Datenbusteilnehmers (7a, 7b, ..., 7n) an den es gerichtet ist und zumindest eine Instruktionsliste (27a, 27b, 27n) mit einem Satz von Instruktionen zum Verarbeiten von Prozessdaten (25a, 25b, 25c) aufweist;
ein Mittel zum Empfangen eines Symbols eines zweiten Datenpakets (22) über den Lokalbus (6), wobei das zweite Datenpaket (22) Prozessdaten (25a, 25b, 25c) aufweist, wobei das zweite Datenpaket (22) eine Anzahl von Symbolen aufweist;
ein Mittel zum Ausführen von Instruktionen der zumindest einen Instruktionsliste (27a, 27b, 27n) zum Verarbeiten der empfangenen Prozessdaten (25a, 25b, 25c);
der Datenbusteilnehmer **gekennzeichnet durch**:
Mittel zum Weiterleiten des verarbeiteten Symbols des zweiten Datenpakets (22) an einen weiteren Datenbusteilnehmer (7a, 7b, ..., 7n) über den Lokalbus (6) und gleichzeitiges Empfangen eines weiteren Symbols des zweiten Datenpakets (22) mit dem Mittel zum Empfangen, wobei die Weiterleitung so lange verzögert wird, dass jedes Symbol immer gleich lang am Datenbusteilnehmer (7a, 7b, ..., 7n) verbleibt.

## Claims

1. A method for operating a data bus subscriber (7a, 7b, ..., 7n) of a local bus (6), the method comprising:
receiving a first data packet (17) via the local bus (6), wherein the first data packet (17) comprises an address (19) of the data bus subscriber (7a, 7b, ..., 7n) to which it is directed and at least one instruction list (27a, 27b, 27n) with a set of instructions for processing process data (25a, 25b, 25c);
receiving a symbol of a second data packet (22) via the local bus (6), the second data packet (22) having process data (25a, 25b, 25c), the second data packet (22) comprising a number of symbols;
executing instructions of the at least one instruction list (27a, 27b, 27n) for processing the received process data (25a, 25b, 25c) symbol-by-symbol; the method **characterized by**:
forwarding the processed symbol of the second data packet (22) to a further data bus subscriber (7a, 7b, ..., 7n) via the local bus (6) and simultaneously receiving a further symbol of the second data packet (22), wherein the forwarding is delayed so long that each symbol always remains for the same duration at the data bus subscriber (7a, 7b, ..., 7n).

2. The method according to claim 1, wherein the first and second data packets (17, 22) are payload data of a cycle frame or two cycle frames.

3. The method according to one of the preceding claims, wherein the first data packet (17) comprises a number of symbols.

4. The method according to one of the preceding claims, wherein each symbol is processed with a fixed number of instructions of the instruction list (27a, 27b, 27n).

5. The method according to claim 4, wherein the symbol-by-symbol processing of the received process data (25a, 25b, 25c) comprises bit-granular processing of the received process data (25a, 25b, 25c).

6. The method according to claim 5, wherein the bit-granular processing comprises:
performing a bit operation on at least one bit of the received symbol to obtain at least one processed process datum.

7. The method according to one of the preceding claims, wherein the address is a biunique address used for addressed communication with the data bus subscriber (7a, 7b, ..., 7n).

8. A data bus subscriber (7a, 7b, ..., 7n) of a local bus (6), the data bus subscriber (7a, 7b, ..., 7n) comprising:
means for receiving a first data packet (17) via the local bus (6), wherein the first data packet (17) comprises an address (19) of the data bus subscriber (7a, 7b, ..., 7n) to which it is directed, and at least one instruction list (27a, 27b, 27n) with a set of instructions for processing process data (25a, 25b, 25c);
means for receiving a symbol of a second data packet (22) via the local bus (6), wherein the second data packet (22) comprises process data (25a, 25b, 25c), the second data packet (22) comprising a number of symbols;
means for executing instructions of the at least one instruction list (27a, 27b, 27n) for processing the received process data (25a, 25b, 25c); the data bus subscriber **characterized by**:
means for forwarding the processed symbol of the second data packet (22) to a further data bus subscriber (7a, 7b, ..., 7n) via the local bus (6) and simultaneously receiving a further symbol of the second data packet (22) with the means for receiving, wherein the forwarding is delayed so long that each symbol always remains for the same duration at the data bus subscriber (7a, 7b, ..., 7n).

## Revendications

1. Procédé de mise en œuvre d'un participant à un bus de données (7a, 7b, ..., 7n) d'un bus local (6), le procédé comportant :
la réception d'un premier paquet de données (17) sur le bus local (6), dans lequel le premier paquet de données (17) comporte une adresse (19) du participant au bus de données (7a, 7b, ..., 7n) qui en est le destinataire, et au moins une liste d'instructions (27a, 27b, 27n) avec un ensemble d'instructions pour le traitement de données de processus (25a, 25b, 25c) ;
la réception d'un symbole d'un deuxième paquet de données (22) sur le bus local (6), dans lequel le deuxième paquet de données (22) comporte des données de processus (25a, 25b, 25c), dans lequel le deuxième paquet de données (22) comporte un nombre de symboles ;
l'exécution d'instructions de l'au moins une liste d'instructions (27a, 27b, 27n) pour le traitement symbole par symbole des données de processus (25a, 25b, 25c) reçues;
le procédé étant **caractérisé par** :
le transfert du symbole traité du deuxième paquet de données (22) à un autre participant au bus de données (7a, 7b, ..., 7n) sur le bus local (6), et la réception simultanée d'un autre symbole du deuxième paquet de données (22), dans lequel le transfert est retardé de manière que chaque symbole reste toujours de même longueur au niveau du participant au bus de données (7a, 7b, ..., 7n).

2. Procédé selon la revendication 1, dans lequel le premier et le deuxième paquet de données (17, 22) sont des données utiles d'une trame de cycle ou de deux trames de cycle.

3. Procédé selon l'une des revendications précédentes, dans lequel le premier paquet de données (17) comporte un certain nombre de symboles.

4. Procédé selon l'une des revendications précédentes, dans lequel chaque symbole est traité avec un nombre fixe d'instructions de la liste d'instructions (27a, 27b, 27n).

5. Procédé selon la revendication 4, dans lequel le traitement symbole par symbole des données de processus (25a, 25b, 25c) reçues comporte un traitement bit-granulaire des données de processus (25a, 25b, 25c) reçues.

6. Procédé selon la revendication 5, dans lequel le traitement bit-granulaire comporte :
l'exécution d'une opération de bit sur au moins un bit du symbole reçu pour obtenir au moins une date de processus traitée.

7. Procédé selon l'une des revendications précédentes, dans lequel l'adresse est une adresse unique qui est utilisée pour la communication adressée avec le participant au bus de données (7a, 7b, ..., 7n).

8. Participant à un bus de données (7a, 7b, ..., 7n) d'un bus local (6), le participant au bus de données (7a, 7b, ..., 7n) comportant :
un moyen de réception d'un premier paquet de données (17) sur le bus local (6), dans lequel le premier paquet de données (17) comporte une adresse (19) du participant au bus de données (7a, 7b, ..., 7n) qui en est le destinataire, et au moins une liste d'instructions (27a, 27b, 27n) avec un ensemble d'instructions pour le traitement de données de processus (25a, 25b, 25c) ;
un moyen de réception d'un symbole d'un deuxième paquet de données (22) sur le bus local (6), dans lequel le deuxième paquet de données (22) comporte des données de processus (25a, 25b, 25c), dans lequel le deuxième paquet de données (22) comporte un nombre de symboles ;
un moyen d'exécution d'instructions de l'au moins une liste d'instructions (27a, 27b, 27n) pour le traitement des données de processus (25a, 25b, 25c) reçues ;
le participant au bus de données étant **caractérisé par** :
des moyens de transfert du symbole traité du deuxième paquet de données (22) à un autre participant au bus de données (7a, 7b, ..., 7n) sur le bus local (6), et de réception simultanée d'un autre symbole du deuxième paquet de données (22) avec le moyen de réception, dans lequel le transfert est retardé de manière à ce que chaque symbole reste toujours de même longueur sur le participant au bus de données (7a, 7b, ..., 7n).
